# EUROPÄISCHE PATENTSCHRIFT

(11) **EP 1 727 611 B1**
(45) Veröffentlichungstag und Bekanntmachung des Hinweises auf die Patenterteilung: **10.04.2013**
(21) Anmeldenummer: 05715255.5
(22) Anmeldetag: 04.02.2005
(51) Int. Cl.: B01D 61/50, B01D 61/42, B01D 63/08, B01D 57/02

(54) **VORRICHTUNG UND VERFAHREN FÜR DIE MEMBRAN-ELEKTROPHORESE UND ELEKTROFILTRATION**
DEVICE AND METHOD FOR CARRYING OUT MEMBRANE ELECTROPHORESIS AND ELECTROFILTRATION
DISPOSITIF ET PROCEDE POUR L'ELECTROPHORESE SUR MEMBRANE ET L'ELECTROFILTRATION

(30) Priorität: 17.02.2004 DE 102004007848
(43) Veröffentlichungstag der Anmeldung: 06.12.2006
(73) Patentinhaber: Bayer Intellectual Property GmbH, 40789 Monheim (DE); Sartorius Stedim Biotech GmbH, 37079 Göttingen (DE)
(72) Erfinder: LAUSCH, Ralf, 37079 Göttingen (DE); REIF, Oscar-Werner, 37073 Göttingen (DE); GRUMMERT, Ulrich, 37242 Bad Soden Allendorf (DE); HAUFE, Stefan, 37083 Göttingen (DE); LINNE, Holger, 37075 Göttingen (DE); PASTOR, Andre, 37077 Göttingen (DE); DUDZIAK, Gregor, Oakland, California 94602 (US); NICKEL, Andreas, 58300 Wetter (DE); MUTTER, Martina, 51063 Köln (DE); TRAVING, Michael, 51399 Burscheid (DE)
(74) Vertreter: BIP Patents
(86) Internationale Anmeldenummer: PCT/EP2005/001131
(87) Internationale Veröffentlichungsnummer: WO 2005/079961

(56) Entgegenhaltungen:
- WO-A-82/00775
- WO-A-92/21433
- DE-A1- 3 441 249
- US-A- 3 870 617
- US-A- 4 204 929
- US-A- 5 080 770
- US-A- 5 422 057
- US-B1- 6 328 869

## Beschreibung

Die Erfindung betrifft eine Vorrichtung und ein Verfahren für die Membranelektrophorese und die Elektrofiltration. Dabei enthält die Vorrichtung ein Modul, das fest gefügt ist.

Bei der Membranelektrophorese wirken üblicherweise semipermeable Membranen als Konvektionsbarrieren zwischen zwei angrenzenden Separationskanälen, wobei mindestens eine gelöste oder dispergierte Komponente unter Wirkung eines elektrischen Feldes von einem Kanal in den anderen wandern kann.

In früheren Publikationen zur Membranelektrophorese (DE 3 337 669-A2, US-A- 4 043 896, US-A- 6 328 869) werden Vorrichtungen zur Elektrophorese beschrieben, die manuell zusammengefügt werden müssen. Die Module, bestehend aus Flachmembranen, Rahmendichtungen und eventuell Geweben, werden in Spannrahmen eingespannt und durch Verschrauben abgedichtet. Die Spannrahmen enthalten Zu- und Ableitungen für Konzentrat-, Diluat- und Elektrodenräume, sowie jeweils eine Elektrode.

Diese Konstruktion, die auch in der Elektrodialyse angewendet wird, bietet den Vorteil großer Flexibilität, da die Membranen im Bedarfsfall einzeln ausgetauscht werden können. Die manuelle Zusammenstellung der Module ist im Produktionsmaßstab jedoch ein sehr zeitaufwendiger Prozess. Darüber hinaus kann kein Integritäts- und Dichtigkeitstest der Vorrichtung bereits beim Hersteller erfolgen. Diese Tests können erst nach Zusammenbau der Einzelkomponenten beim Anwender durchgeführt werden.

Bei der manuellen Zusammenstellung solcher Module vor allem im Produktionsmaßstab ergeben sich verhältnismäßig große Abweichungen bei der Zentrierung von Membranen und Abstandshaltern. Dies führt zu ungleichen Druckverlusten parallel geschalteter Verteiler-Kanäle und somit zu örtlich unterschiedlichen Überströmgeschwindigkeiten und im Extremfall zu Totzonen. Selektivität und Produktivität einer Trennoperation werden durch nicht ideale Strömungsführung im Modul gemindert.

In der Regel bilden sich bei solchen Vorrichtungen Flüssigkeitsfilme zwischen Dichtungen und Membranen, was insbesondere bei hoher Überströmungsgeschwindigkeit und erhöhtem Druck im Modul zur Undichtigkeit des Moduls führt.

Übliche Überströmungsgeschwindigkeiten beim Betrieb der oben beschriebenen manuell aufgebauten Module liegen in der Größenordnung von 0,1 m/s (Galier et al., J. Membrane Sci 194 [2001] 117-133, US-A-5 087 338).

Bei der Membranelektrophorese können jedoch insbesondere bei hoher Solvatkonzentration höhere Überströmungsgeschwindigkeiten erforderlich sein. Eine zu niedrige Überströmungsgeschwindigkeit führt zu Konzentrations-Polarisation an der Membran. Im Extremfall bilden sich Produktablagerungen auf den Membranen.

Durch Toträume im Dichtungsbereich wird bei bekannten Vorrichtungen darüber hinaus eine zuverlässige Sterilisierung, z.B. mit Natronlauge, erheblich erschwert. Eine Dampfsterilisation eines solchen Moduls bei 120°C ist aufgrund des erhöhten Drucks und der daraus resultierenden Leckagen nicht möglich. Somit sind Module herkömmlichen Typs nur eingeschränkt wiederverwendbar.

Die oben beschriebenen Nachteile der herkömmlichen Konstruktionen treten bereits im kleinen Maßstab auf und nehmen im Fall einer Maßstabsvergrößerung zu.

Für die Querstrom-Filtration sind Kassettenmodule Stand der Technik. Dabei werden in der Regel mehrere Kassettenmodule in Serie angeordnet. Die Kassettenmodule sind dabei zwischen Einspannplatten in ihren Randbereichen eingepresst. Dabei sind die Einspannplatten als An- und/oder Abströmplatten mit entsprechenden Verteilern und Anschlüssen an die Kanäle für Fluidzulauf, Retentatablauf und Permeatablauf ausgebildet.

Bei der Querstrom-Filtration wird das zu filtrierende Fluid über Verteiler-Kanäle in die Überströmspalten der Filterkassette für zu filtrierendes Fluid gedrückt. Es überströmt die Membranflächen und wird als Retentat abgeführt. Ein Teil permeiert durch die Membranen, wird gesammelt und über entsprechende Kanäle und die Abströmplatte als Permeat aus der Anlage abgeführt. Über Pumpen und Ventile werden die Fluidflüsse und -drücke geregelt. Querstrom-Filterkassetten werden beispielsweise in den Schriften US-A-4 715 955 und DE 3 441 249-A2 beschrieben.

Bei der Elektrofiltration werden sowohl eine Druckdifferenz wie bei der Querstrom-Filtration als auch ein elektrisches Feld wie bei der Membranelektrophorese als Triebkräfte für einen Trennprozess genutzt. Die zu separierende Flüssigkeit durchströmt den Retentatraum und permeiert teilweise eine semipermeable Membran. Durch Überlagerung eines elektrischen Feldes orthogonal zur Membran kann die Selektivität der Trennung erheblich gesteigert werden.

Die bisher beschriebenen Vorrichtungen zur Elektrofiltration entsprechen im Aufbau dem Stand der Technik der Vorrichtungen zur Membranelektrophorese. Wie dort werden manuell aufgebaute Module beschrieben, bestehend aus Flachmembranen, Rahmendichtungen und eventuell Geweben, die in Spannrahmen eingespannt und durch Verschrauben abgedichtet werden. Die Spannrahmen können Zu- und Ableitungen für Retentat-, Permeat und Elektrodenräume, sowie jeweils eine Elektrode enthalten.

Es werden einerseits Module beschrieben, die Zu- und Ableitungen für den Retentatraum, aber nur eine Ableitung für den Permeatraum haben (US-A-3 079 318), andererseits auch Module, bei denen durch Zu- und Ableitungen in Retentatraum und Permeatraum beide Ströme rezirkuliert werden können (US-A-4 043 896).

US-A-5 080 770 offenbart ein Verfahren und eine Vorrichtung zur Trennung von Teilchen, die mit einer Flüssigkeit vermischt sind, mittels Membranelektrophorese und Elektrofiltration. Die Vorrichtung weist dabei unter anderem eine erste Halterplatte, einen ersten Elektrodenraum mit Elektrode, wenigstens je einen Eingangs- und Ausgangsraum, einen zweiten Elektrodenraum mit Elektrode, eine zweite Halterplatte sowie Räume auf, die gegeneinander durch flächige Zuschnitte von Membranen getrennt sind und in den Halterplatten Anschlusskanäle vorhanden sind. Die offenbarte Vorrichtung bietet aber weder die Möglichkeit, die Funktionsfähigkeit und Dichtigkeit am Produktionsort zu überprüfen, noch eine gute Sterilisierbarkeit und damit Wiederverwendbarkeit.

Sowohl US-A-5422057 als auch DE-A-19643851 offenbaren Vorrichtungen, bei denen die Eingangs- und Ausgangsräume durch Verschweißen oder Verkleben der Membranen mit Abstandshaltern und Rahmendichtungen in einem Modul integriert sind. Jedoch handelt es sich bei diesen Vorrichtungen um Filtermodule, nicht um Vorrichtungen zur Membranelektrophorese und Elektrofiltration. Außerdem werden gemäß US-A-5422057 die Filterkanäle nachträglich durch Durchbohren des Bauteils erzeugt, was zu Dichtigkeitsproblemen führt.

Da die bisher beschriebenen Vorrichtungen zur Elektrofiltration dieselben Schwachstellen aufweisen wie die zur Membranelektrophorese, können bei diesem Verfahren dieselben Probleme, insbesondere bezüglich Testung, Wiederverwendung und Maßstabsvergrößerung beobachtet werden.

Membranelektrophorese und Elektrofiltration werden zusammenfassend als elektrophoretische Trennverfahren bezeichnet.

Der Erfindung liegt die Aufgabe zugrunde, eine optimierte, scale-up-fähige Vorrichtung für die technische Membranelektrophorese und die technische Elektrofiltration zu entwickeln, die ein Modul enthält, das bereits nach der Herstellung, das heißt noch beim Hersteller auf Dichtigkeit wenigstens der Eingangsräume und Ausgangsräume getestet werden kann.

Als Eingangsräume werden die Räume definiert, die mit der zu separierenden Mischung durchströmt werden. Als Ausgangsräume werden die Räume bezeichnet, die durch die Separationsmembran permeierte Komponenten aufnehmen.

Darüber hinaus sollen die Membranintegrität der verbauten Membranzuschnitte sowie die Funktionsfähigkeit des Moduls testbar sein.

Darüber hinaus soll die Vorrichtung mit Natronlauge und/oder Dampf bei mindestens 120°C sterilisierbar sein.

Das Modul soll leicht auszuwechseln sein und ein minimales Totvolumen aufweisen.

Das Modul soll insbesondere mit einer Überströmungsgeschwindigkeit von bis zu 1 m/s betrieben werden können.

Das Modul soll insbesondere mehrere jeweils parallel verschaltete Eingangsräume und Ausgangsräume in alternierender Anordnung aufweisen, die durch hinreichend zentrierte Membranen und Abstandshalter gebildet werden, was einen reproduzierbaren und gleichmäßigen Druckabfall in allen Kanälen und eine gleichmäßige Verteilung der Flüssigkeitsströme auf parallel geschaltete Kanäle gewährleistet.

Durch den Betrieb des neuartigen Moduls sollen Produktivität und/oder Selektivität von elektrophoretischen Trennprozessen im Vergleich zum Betrieb herkömmlicher, ausschließlich manuell zusammengefügter Module gesteigert werden.

Die Vorrichtung soll dergestalt konstruiert sein, dass mehrere Module platzsparend seriell und/oder parallel verschaltet werden können.

Beim Betrieb der Vorrichtung zur Membranelektrophorese werden die Eingangsräume als Diluaträume und die Ausgangsräume als Konzentraträume bezeichnet.

Beim Betrieb der Vorrichting als Elektrofiltration werden die Eingangsräume als Retentaträume und die Ausgangsräume als Permeaträume bezeichnet.

Es wurde nun eine Vorrichtung zur Membranelektrophorese und Elektrofiltration gefunden, welche mindestens je einen Eingangsraum und einen Ausgangsraum sowie je einem Anoden- und Kathodenraum enthält. Eingangs- und Ausgangsraum sind durch eine Separationsmembran getrennt. Die Abgrenzung der Eingangs- und Ausgangsräume von den Elektrodenräumen erfolgt durch Restriktionsmembranen. In den Anodenraum und den Kathodenraum sind Elektroden integriert. Mindestens die Eingangs- und Ausgangsräume sind in einem Modul durch Verschweißen oder Verkleben der Membranen mit Abstandshaltern und Rahmendichtungen fest integriert. Somit kann das komplette Modul in einem Stück gefertigt und bereits am Produktionsort auf seine Dichtigkeit, Membranintegrität und Funktionsfähigkeit getestet werden.

Durch Minimierung der Toträume im Modul und durch Verschweißen oder Verkleben der Rahmendichtungen mit den Membranen wird darüber hinaus eine gute Sterilisierbarkeit und somit Wiederverwendbarkeit erzielt.

Durch Zentrierung und dauerhafte Fixierung der Membranen und Abstandshalter beim Hersteller wird eine Optimierung der Flüssigkeitsverteilung erreicht, die eine Optimierung der Selektivität und Produktivität von Trennprozessen ermöglicht.

Die oben genannten Aufgaben werden durch diese Vorrichtung in überraschend einfacher und effizienter Art und Weise gelöst.

Gegenstand der vorliegenden Erfindung ist daher eine Vorrichtung zur Membran-Elektrophorese oder Elektrofiltration mindestens umfassend eine erste Halterplatte, einen ersten Elektrodenraum mit Elektrode, wenigstens je einen Eingangs- und Ausgangsraum, einen zweiten Elektrodenraum mit Elektrode und eine zweite Halterplatte, wobei die Räume gegeneinander durch flächige Zuschnitte von Membranen getrennt sind und wobei wenigstens die Membranen in ihren Randbereichen von einem Dichtrahmen in einem fest gefügten Modul zusammengefasst sind. Der Dichtrahmen besitzt Kanäle für die Zuführung und Abführung von Flüssigkeiten mit davon abgehenden Durchbrechungen zu ausgewählten Räumen. In mindestens einer der Halterplatten sind Anschlusskanäle vorhanden, die mit den jeweiligen Kanälen in dem Dichtrahmen korrespondieren.

Im erfindungsgemäßen Modul können mehrere Eingangs- und Ausgangsräume alternierend angeordnet sein. Die Eingangsräume und die Ausgangsräume sind bevorzugt jeweils parallel verschaltet.

In einer besonderen Ausführungsform des erfindungsgemäßen Moduls stellen die im Modul eingesetzten Membranen Separations- und Restriktionsmembranen dar, welche alternierend angeordnet sind. Insbesondere ist dabei die Anzahl der Restriktionsmembranen um 1 höher als die der Separationsmembranen, d.h. wenn die Anzahl der Separationsmembranen n, mit n gleich einer ganzen Zahl, ist, beträgt die Zahl der Restriktionsmembranen n+1.

Die Elektroden können wahlweise in das oben beschriebene Modul, in eigenständige Elektrodenmodule oder in die Modul-Halterplatten integriert sein. Alternativ kann eine Mischform der obengenannten Konfigurationen gewählt werden, in dem etwa nur die Anode in das Separationsmodul integriert ist und die Kathode wahlweise in ein separates Modul oder in eine Modulhalterplatte integriert ist. Eine solche Konfiguration ist wirtschaftlich sinnvoll, wenn sich zum Beispiel die erreichbaren Betriebszeiten für Membranen, Kathode und/oder Anode deutlich unterscheiden.

In einer weiteren Ausführung der erfindungsgemäßen Vorrichtung können in das Separationsmodul sowohl Elektroden als auch Halterplatten integriert sein. Die Halterplatten enthalten Zu- und Ableitungen für Eingangs- und Ausgangsräume sowie für die Elektrodenräume.

Bevorzugt wird die erfindungsgemäße Vorrichtung, bzw. ihre Bauelemente wie Halterplatten und Module durch einen Anpressdruck im Randbereich fluiddicht zusammengehalten.

Der Dichtrahmen weist bevorzugt gegenüber den flächigen Zuschnitten einen radialen oder axialen Überstand auf, insbesondere einen axialen Überstand von weniger 100 µm, welcher unter einem Anpressdruck eine periphere Randdichtung bildet.

Der Grundwerkstoff des Moduls ist so gewählt, dass das Modul sterilisiert werden kann. Die Sterilisation kann wahlweise mit Natronlauge oder Dampf (120°C) durchgeführt werden. Als Grundwerkstoffe für das Modul werden Polycarbonat, Polyvinylchlorid, Polysulfon oder andere Kunststoffe/Polymere, bevorzugt Thermoplaste wie z.B. ETFE (Ethylen/Tetrafluorethylen), ECTFE (Ethylen/Chlortrifluorethylen), PP (Polypropylen), PFEP (Tetrafluorethylen/ Hexafluorpropylen), PFA (Perfluoralkoxy-Copolymer), PVDF (Polyvinylidenfluorid) eingesetzt. Bei der Verwendung von nicht schweißbaren Kunststoffen kann Silikon oder Epoxyharz als Klebstoff verwendet werden.

Bei den verwendeten Membranen handelt es sich vorzugsweise um poröse Membranen, insbesondere Ultra- oder Mikrofiltrationsmembranen, mit Porengrößen von 1 bis 5000 nm, bevorzugt 1-1000 nm, besonders bevorzugt 5-800 nm.

Die Membranen basieren bevorzugt auf einem der folgenden Werkstoffe: Celluloseester, Polyacrylnitril, Polyamid, Polycarbonat, Polyether, Polyethersulfon, Polyethylen, Polypropylen, Polysulfon, Polytetrafluoroethylen, Polyvinylalkohol, Polyvinylchlorid, Polyvinylidenfluorid, regenerierte Cellulose, oder Aluminiumoxid, Siliciumoxid, Titanoxid, Zirkonoxid sowie Mischkeramiken aus den oben genannten Oxiden.

Zur besseren Strömungsführung im Modul werden vorzugsweise in den Konzentrat- und Diluaträumen, aber auch in den Elektrodenräumen, Abstandshalter, die mit Gittern oder Geweben ausgestattet sind, eingesetzt. Diese Einbauten fungieren als Strömungsbrecher und optimieren den Stoffübergang. Diese Abstandshalter sind ebenfalls in ihrem Randbereich von einem Dichtrahmen fixiert und mit den anliegenden Membranen dauerhaft zu einem Modul verbunden, wobei sich Überströmungskanäle ausbilden.

Die Dichtrahmen können aus Kunststoff oder einem Gemisch aus Kunststoffen, bevorzugt Thermoplasten, thermoplastischen Elastomeren oder ausgehärteten Kunststoffen bestehen. Beispiele sind Polyethylen, Polypropylen, Polyamid, Ethylen-Propylen-Dien-Polymethylen (EPDM), Epoxidharz, Silikon, Polyurethan und Polyesterharz.

Die Elektroden basieren bevorzugt auf einem oder mehreren der folgenden Werkstoffe: Metalle wie zum Beispiel Platin, Palladium, Gold, Titan, Edelstahl, Hastelloy C, Metalloxiden, wie zum Beispiel Iridiumoxid, Graphit oder stromleitenden Keramiken. Als Bauformen kommen Elektroden flächiger Ausführung (Folien, Platten) oder räumlicher Ausführung (Gewebe, Gitter, Streckmetalle oder Stege) zum Einsatz. Die Elektrodenoberfläche kann durch Beschichtungsverfahren wie zum Beispiel Platinierung vergrößert sein.

Die Vorrichtung enthält Einrichtungen zur kontinuierlichen Durchströmung der Anoden- und Kathodenräume. Kathodenraum und Anodenraum sind bevorzugt zu unabhängigen Kreisläufen verschaltet.

Im technischen Maßstab besteht die erfindungsgemäße Vorrichtung dabei bevorzugt aus zwei oder mehreren Modulen, die in einem Stapel zusammengefasst sind und über gemeinsame Kanäle angeströmt werden. Bevorzugt werden jeweils zwei Module durch eine bidirektionale Halterplatte verbunden, wobei diese Kanäle zur Flüssigkeitsverteilung enthalten, die wenigstens mit den Eingangs- und Ausgangsräumen der Module verschaltet sind.

Auch bei der Verschaltung von Modulen mittels bidirektionaler Halterplatten sind verschiedene Elektrodenkonfiguration möglich. Die Elektroden können entweder in die Separationsmodule oder in die Halterplatten integriert sein, oder es werden gesonderte Elektrodenmodule eingesetzt.

Die Vorrichtung kann sowohl im Batch-Betrieb als auch im kontinuierlichem Betrieb eingesetzt werden.

Gegenstand der Erfindung ist auch ein Verfahren zur Membran-Elektrophorese, insbesondere unter Verwendung der erfindungsgemäßen Vorrichtung, wobei gelöste und/oder dispergierte Substanzen bevorzugt unter Verwendung der erfindungsgemäßen Vorrichtung separiert werden. Dabei werden die Elektroden kontinuierlich von Elektrodenspüllösung umspült und das Diluat kontinuierlich durch den Diluatraum beziehungsweise das Konzentrat kontinuierlich durch den Konzentratraum geführt. Im Verfahren wird mindestens eine im Diluat gelöste oder dispergierte Substanz mittels eines zwischen Anode und Kathode angelegten elektrischen Feldes elektrophoretisch vom Diluatraum in den Konzentratraum überführt. Das Diluat strömt dabei mit einer Strömungsgeschwindigkeit von wenigstens 0,025 m/s, bevorzugt von 0,05 bis 0,5 m/s, an der Separationsmembran vorbei.

Bei der Elektrophorese bildet sich in den Membranporen eine elektrische Doppelschicht aus, was im elektrischen Feld zur Induktion eines elektroosmotischen Flusses führt (Galier et al., J. Membr. Sci. 194 [2001] 117-133). Dieser Effekt, der Produktivität wie Selektivität negativ beeinflussen kann, kann mittels Druckbeaufschlagung des Diluat- oder Konzentratraums ausgeglichen werden.

Ebenfalls Gegenstand der Erfindung ist ein Verfahren zur Elektrofiltration, insbesondere unter Verwendung der erfindungsgemäßen Vorrichtung, wobei gelöste oder dispergierte Substanzen separiert werden. Dabei werden die Elektroden kontinuierlich von Elektrodenspüllösung umspült und das Retentat kontinuierlich durch den Retentatraum, beziehungsweise das Permeat kontinuierlich durch den Permeatraum geführt. Im Verfahren werden im Retentat gelöste und/oder dispergierte Substanzen mittels einer zwischen Retentatraum und Permeatraum angelegten Druckdifferenz sowie mittels eines zwischen Anode und Kathode angelegten elektrischen Feldes separiert, wobei mindestens eine im Retentat gelöste oder dispergierte Substanz in einem Flüssigkeitsstrom aus dem Retentatraum durch die Separationsmembran in den Konzentratraum überführt wird, dergestalt, dass das Retentat mit einer Strömungsgeschwindigkeit von wenigstens 0,025 m/s, bevorzugt von 0,05 bis 0,5 m/s, an der Separationsmembran vorbeiströmt.

Aufgrund der Dichtigkeit kann das Modul grundsätzlich mit hoher Überströmung betrieben werden. Um einen konvektiven Strom durch die Separationsmembran im Fall der Membranelektrophorese zu minimieren oder einen kontrollierten konvektiven Strom im Fall der Elektrofiltration zu gewährleisten, ist es erforderlich, dass die Druckdifferenz zwischen den einzelnen Räumen, insbesondere zwischen Eingangs- und Ausgangsraum, über die Länge der Strömungskanäle konstant gehalten werden kann. Dieses Problem kann durch eine Anströmung aller Kanäle im Gleichstrom gelöst werden.

Um elektrische Kurzschlussströme zu minimieren, werden Anoden- und Kathodenräume bevorzugt unabhängig voneinander durchströmt.

Die Erfindung eignet sich zur Aufreinigung gelöster oder disperser Substanzen in wässrigem Medium. Anwendungsbeispiele sind die Reinigung von Proteinen, Peptiden, DNA, RNA, Oligonucleotiden, Plasmiden, Oligo- und Polysacchariden, Viren, Zellen sowie chiraler Moleküle.

Die Erfindung wird nachstehend anhand der Figuren beispielhaft näher erläutert:
Es zeigen:
- Figur 1: die schematische Darstellung des erfindungsgemäßen Moduls in der Aufsicht
- Figur 2: den Längsschnitt durch das Modul aus Figur 1 gemäß Linie A-A in Figur 1
- Figur 3: die Aufsicht auf einen Abstandshalter 5
- Figur 4: die Aufsicht auf einen Abstandshalter 6
- Figur 5: die Aufsicht auf einen Abstandshalter 21
- Figur 6: die Aufsicht auf einen Zuschnitt der Separationsmembran 4, entspricht auch dem Zuschnitt einer Restriktionsmembran
- Figur 7: eine Explosionszeichnung des Moduls nach Figur 1 als Vierer-Stapel

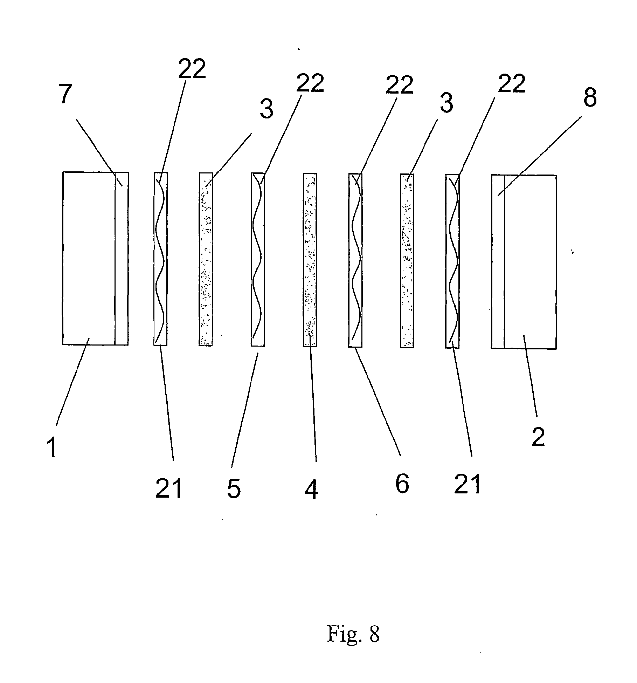

- Figur 8: den Stand der Technik für Elektrophorese und Elektrofiltration: Vorrichtung bestehend aus einzelnen Membranen und Abstandshaltern mit Geweben, die zwischen zwei Halterplatten manuell vor Ort eingedichtet werden.
- Figur 9: die Skizze einer erfindungsgemäßen Vorrichtung mit fest gefügtem Separationsmodul, bestehend aus Membranen, Abstandshaltern und Geweben, das zwischen Halterplatten eingedichtet werden kann. Zu- und Ableitungen für Eingangs- und Ausgangsräume sowie für die Elektrodenräume sind in die Halterplatten integriert.
- Figur 10: die Skizze einer erfindungsgemäßen Vorrichtung mit fest gefügtem Separationsmodul sowie Elektrodenmodulen, die gemeinsam zwischen Halterplatten eingedichtet werden können. Zu- und Ableitungen für Eingangs- und Ausgangsräume sowie für die Elektrodenräume sind in die Halterplatten integriert.
- Figur 11: die Skizze einer erfindungsgemäßen Vorrichtung mit fest gefügtem Separationsmodul, in das die Elektroden integriert sind. Das Modul kann zwischen zwei Halterplatten eingedichtet werden. Zu- und Ableitungen für Eingangs- und Ausgangsräume sowie für die Elektrodenräume sind in die Halterplatten integriert.
- Figur 12: die Skizze einer erfindungsgemäßen Vorrichtung mit fest gefügtem Separationsmodul, in das die Elektroden sowie die Halterplatten integriert sind. Die Halterplatten enthalten Zu- und Ableitungen für Eingangs- und Ausgangsräume sowie für die Elektrodenräume.
- Figur 13: die Skizze einer erfindungsgemäßen Vorrichtung gemäß Fig. 11 mit eingezeichnetem Dichtrahmen inclusive axialer und radialer Überstände.
- Figur 14: die schematische Darstellung parallel verschalteter Module mittels bidirektionaler Halterplatten.
- Figur 15: eine Explosionszeichnung eines Moduls als Zweier-Stapel, das zur Verschaltung gemäß Fig. 14 geeignet ist.

### Beispiele

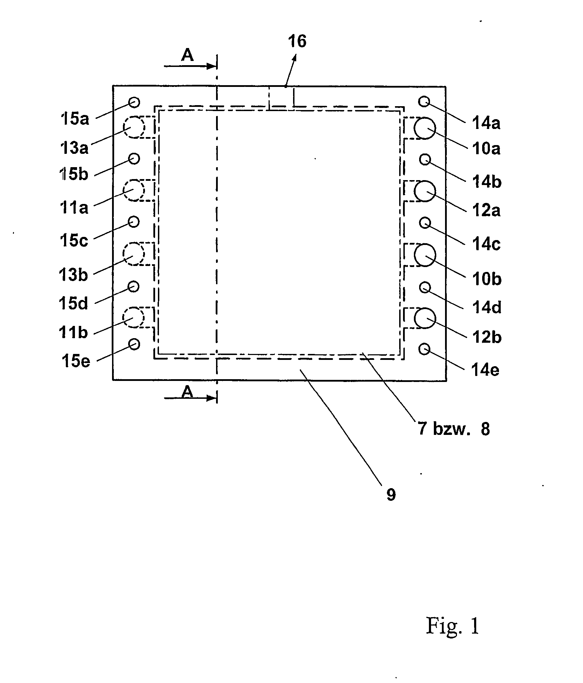

Gemäß Figur 1 ist das erfindungsgemäße Modul mit Zuläufen 10 a,b für den Ausgangsraum und Zuläufen 12 a,b für den Eingangsraum sowie mit Abläufen 11 a,b für den Ausgangsraum und Abläufen 13 a,b für den Eingangsraum versehen. Gleichzeitig sind auch Zugänge 14 a,b,c,d,e zur Beschickung der Elektrodenräume und die entsprechenden Abläufe 15 a,b,c,d,e an der Ober- bzw Unterseite vorhanden. Die hier eingespeiste Lösung dient zur Spülung der Elektroden 7,8. Eingangsraum, Ausgangsraum und Elektrodenräume können im Gleichstrom angeströmt werden.

Die Spannungsversorgung 16 für die Elektroden kann seitlich am Modul integriert werden. Der Modulkörper 9 ist aus Kunststoff gefertigt und fasst alle eingesetzten Bauteile fluiddicht ein.

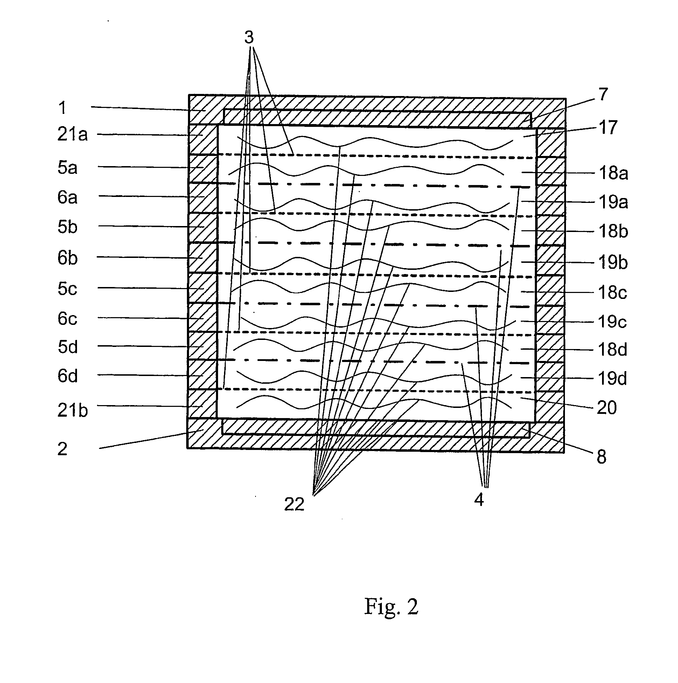

Figur 2 zeigt einen Längsschnitt durch eine Ausführungsvariante des Moduls aus Fig.1 gemäß Linie A-A. Es handelt sich dabei um ein Modul, das einem Membranstapel aus vier Zellpaaren beinhaltet, die parallel verschaltet sind. Das Modul beinhaltet an Ober- und Unterseite jeweils eine Endplatte 1,2 mit integrierter Elektrode 7 und 8. Die Elektrodenräume 17 und 20 werden durch jeweils eine Rahmendichtung 21 a,b gebildet und durch jeweils eine Restriktionsmembran 3 begrenzt. Durch die alternierende Anordnung von Rahmendichtung 5 a,b,c,d, Separationsmembran 4, Rahmendichtung 6 a,b,c,d und Restriktionsmembran 3 wird ein Membranstapel aufgebaut. Dabei werden die Eingangsräume 18 a,b,c,d sowie die Ausgangsräume 19 a,b,c,d vorzugsweise jeweils parallel verschaltet. In Figur 2 ist ein Membranstapel bestehend auf vier Zellpaaren skizziert, es sind jedoch auch Ausführungen mit weniger oder mehr Zellpaaren möglich. Die verwendeten Abstandshalter 5 a,b,c,d und 6 a,b,c,d können zusätzlich mit Geweben oder Gittern 22 ausgestattet sein.

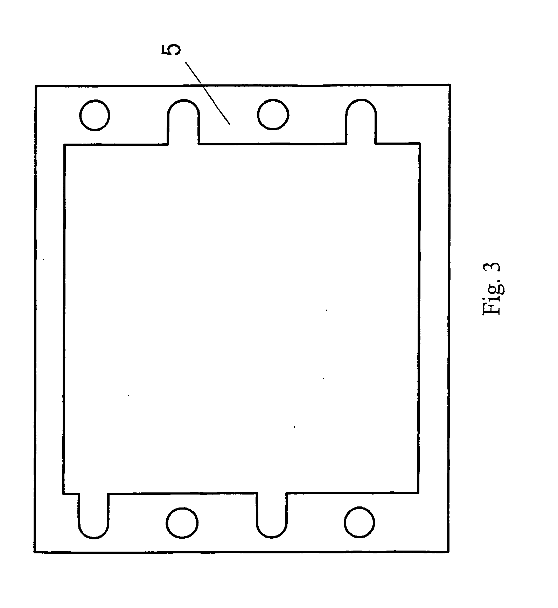

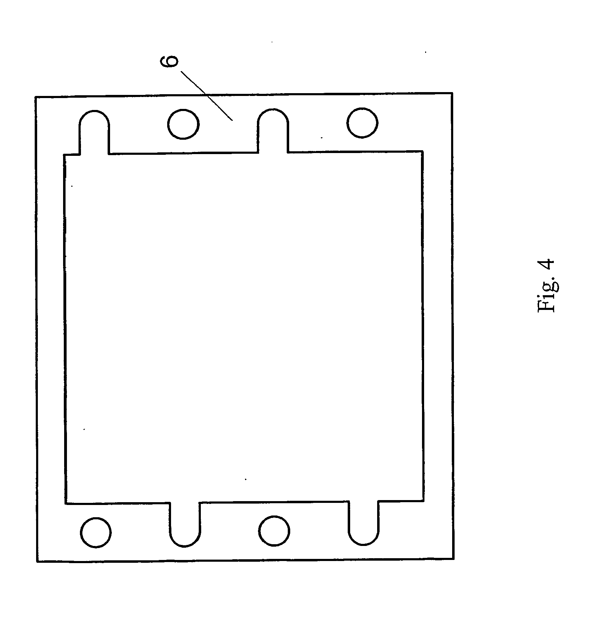

Die Figuren 3 und 4 zeigen jeweils eine Variante der Rahmendichtungen 5 und 6, die zur parallelen Verschaltung der Zellpaare eines Membranstapels eingesetzt werden.

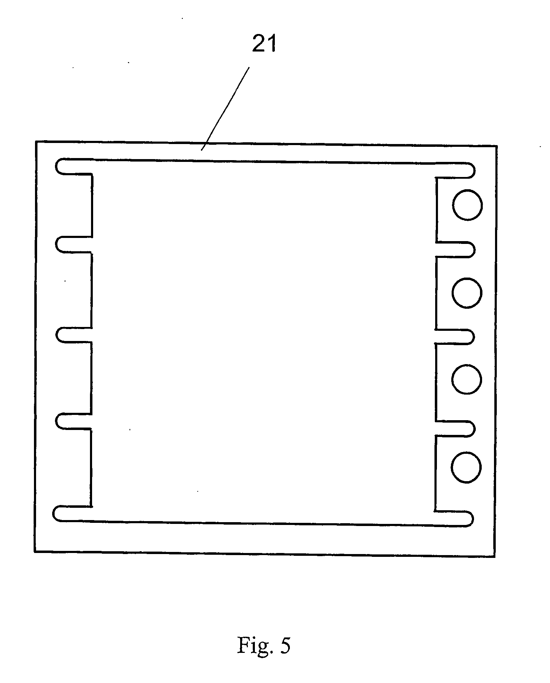

Die Figur 5 zeigt eine Variante der Rahmendichtung 21.

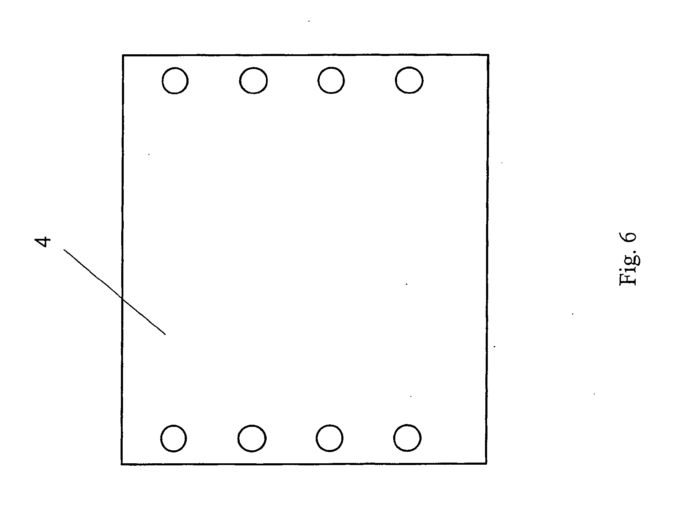

Figur 6 zeigt die Aufsicht auf einen Zuschnitt der Separationsmembran 4. Dieser entspricht auch dem Zuschnitt einer Restriktionsmembran 3.

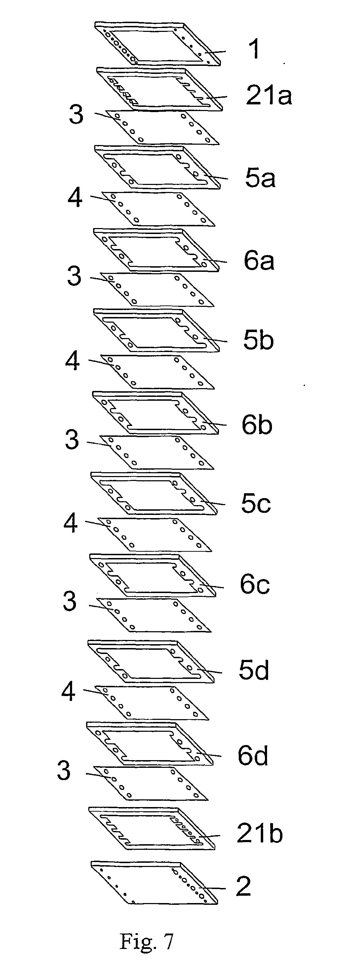

Figur 7 zeigt die prinzipielle Zusammenstellung der einzelnen Elemente einer Ausführungsvariante des erfindungsgemäßen Moduls. Die Endplatten 1 und 2 enthalten Bohrungen zur Durchströmung der Elektrodenräume sowie der Eingangs- und Ausgangsräume. Die einzelnen Räume werden durch die Restriktionsmembranen 3, die Abstandshalter 21 a,b, die Abstandshalter 5 a,b,c,d, die Separationsmembranen 4 sowie die Abstandshalter 6 a,b,c,d gebildet.

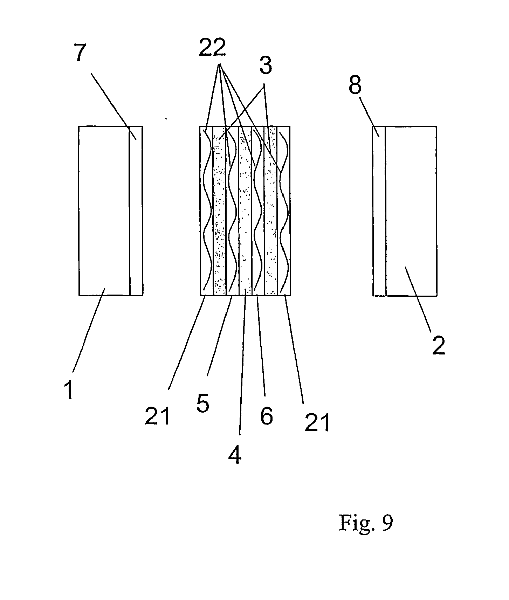

Figur 9 zeigt schematisch eine erfindungsgemäße Vorrichtung mit fest gefügtem Separationsmodul bestehend aus Membranen 3,4, Abstandshaltern 21,5,6 und Geweben 22, das zwischen Halterplatten 1,2 eingedichtet werden kann. Zu- und Ableitungen für Eingangs- und Ausgangsräume sowie für die Elektrodenräume sind in die Halterplatten integriert.

Das Modul in Figur 9 umfasst je einem Eingangs- und Ausgangsraum. Eine Modulvariante, die einen Stapel bestehend aus mehreren, alternierend angeordneten Eingangs- und Ausgangsräumen enthält, ist ebenso denkbar.

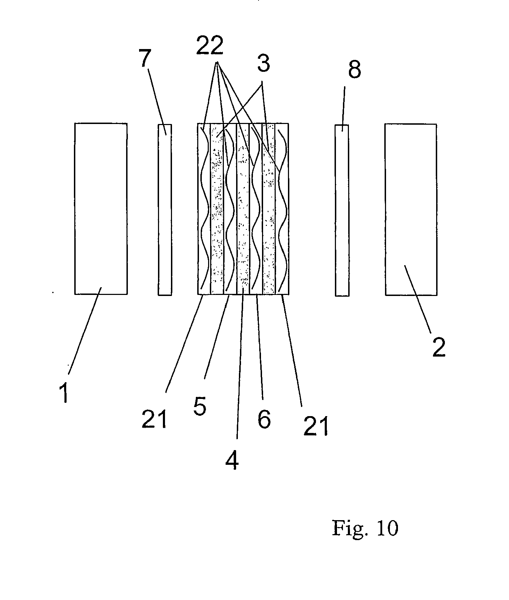

Figur 10 zeigt schematisch eine erfindungsgemäße Vorrichtung mit fest gefügtem Separationsmodul bestehend aus Membranen 3,4, Abstandshaltern 21,5,6 und Geweben 22, sowie Elektrodenmodulen mit eingefassten Elektroden 7,8. Die Module können gemeinsam zwischen Halterplatten 1,2 eingedichtet werden. Zu- und Ableitungen für Eingangs- und Ausgangsräume sowie für die Elektrodenräume sind in die Halterplatten integriert. Das beschriebene Separationsmodul umfasst je einem Eingangs- und Ausgangsraum. Eine Modulvariante, die einen Stapel bestehend aus mehreren, alternierend angeordneten Eingangs- und Ausgangsräumen enthält, ist ebenso denkbar.

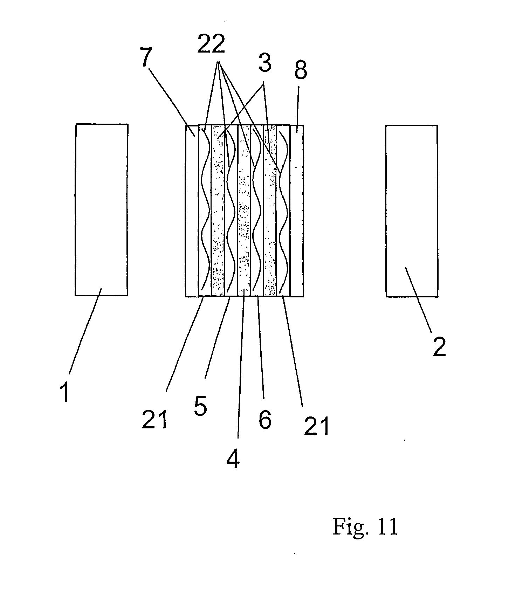

Figur 11 zeigt schematisch eine erfindungsgemäße Vorrichtung mit fest gefügtem Modul bestehend aus Membranen 3,4, Abstandshaltern 21,5,6, Geweben 22 und Elektroden 7,8. Das Modul kann zwischen Halterplatten 1,2 eingedichtet werden. Zu- und Ableitungen für Eingangs- und Ausgangsräume sowie für die Elektrodenräume sind in die Halterplatten integriert. Das beschriebene Separationsmodul umfasst je einem Eingangs- und Ausgangsraum. Eine Modulvariante, die einen Stapel bestehend aus mehreren, alternierend angeordneten Eingangs- und Ausgangsräumen zwischen den Elektrodenräumen enthält, ist ebenso denkbar.

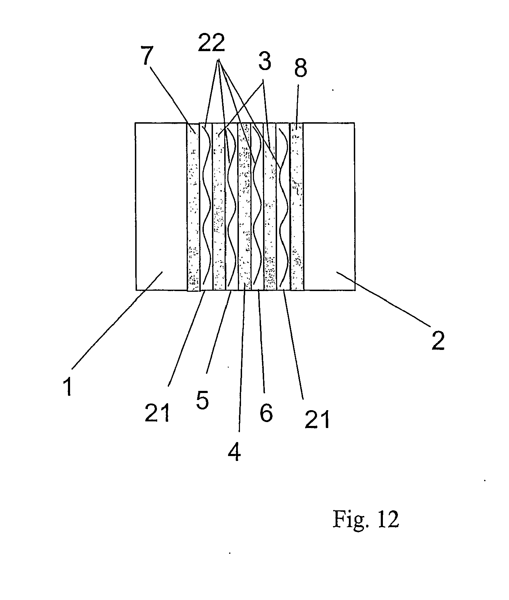

Figur 12 zeigt schematisch eine erfindungsgemäße Vorrichtung mit fest gefügtem Modul, bestehend aus Membranen 3,4, Abstandshaltern 21,5,6, Geweben 22, Elektroden 7,8 und Halterplatten 1,2. Das Modul ist fluiddicht gefertigt und bedarf keiner weiteren Einfassung. Zu- und Ableitungen für Eingangs- und Ausgangsräume sowie für die Elektrodenräume sind in die Halterplatten integriert. Das beschriebene Separationsmodul umfasst je einem Eingangs- und Ausgangsraum. Eine Modulvariante, die einen Stapel bestehend aus mehreren, alternierend angeordneten Eingangs- und Ausgangsräumen zwischen den Elektrodenräumen enthält, ist ebenso denkbar.

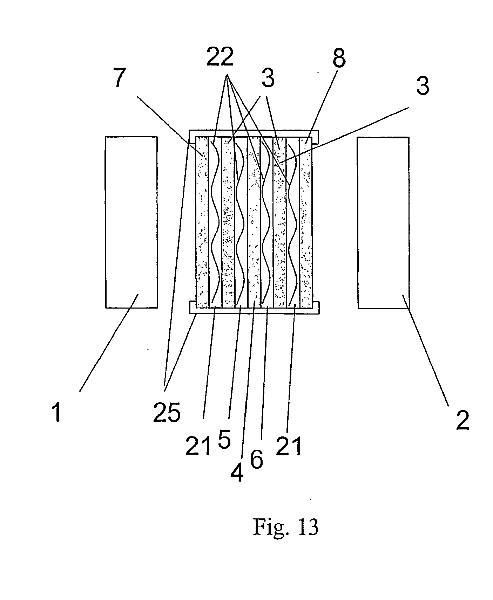

Figur 13 zeigt schematisch eine erfindungsgemäße Vorrichtung mit fest gefügtem Modul gemäß Figur 11, wobei in dieser Skizze zusätzlich ein Dichtrahmen 25 mit radialem und axialem Überstand eingezeichnet ist.

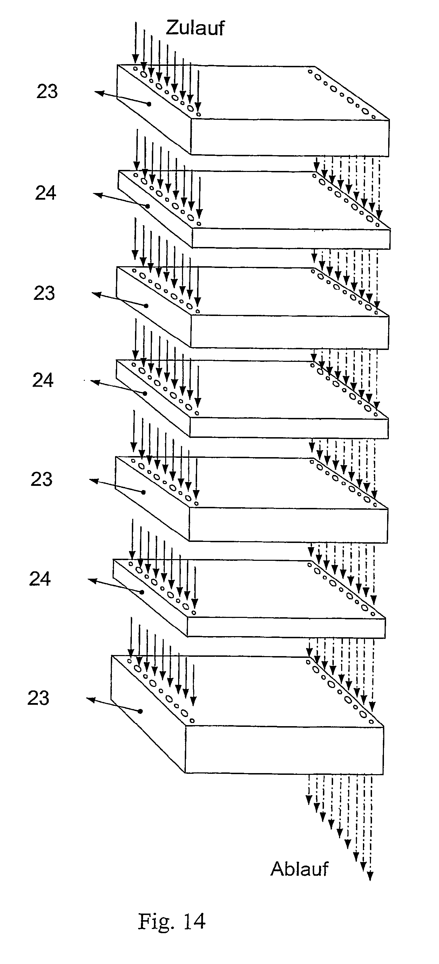

Figur 14 zeigt schematisch die parallele Verschaltung mehrerer Module 23 mittels bidirektionaler Halterplatten 24.

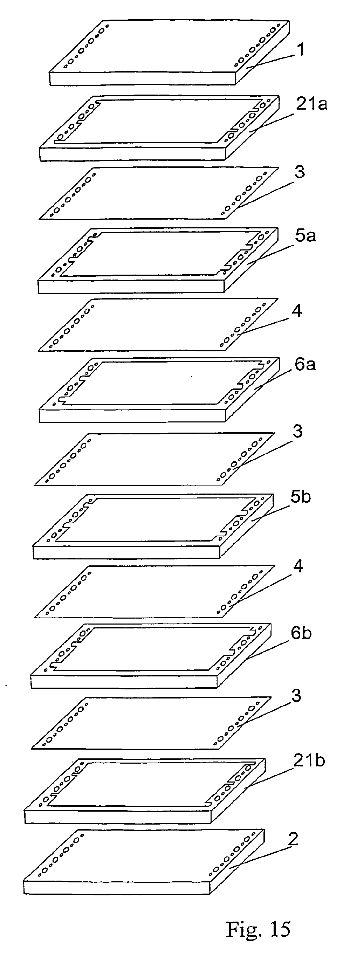

Figur 15 zeigt die Explosionszeichnung eines Moduls als Zweier-Stapel, bestehend aus Endplatten 1,2, Membranen 3,4 und Abstandshaltern 5a,b, 6a,b und 21a,b. Die Elektroden sind in die Endplatten integriert. Das Modul ist zur Verschaltung mittels bipolarer Halterplatten gemäß Figur 14 geeignet.

## Patentansprüche

1. Vorrichtung für die Membran-Elektrophorese oder die Elektrofiltration, mindestens umfassend eine erste Halterplatte (1), einen ersten Elektrodenraum (17) mit Elektrode (7) bestehend aus einem flächigen Zuschnitt eines Elektrodenmaterials, mehrere Eingangs- und Ausgangsräume (18, 19), einen zweiten Elektrodenraum (20) mit Elektrode (8) bestehend aus einem flächigen Zuschnitt eines Elektrodenmaterials und eine zweite Halterplatte (2), wobei die Räume gegeneinander durch flächige Zuschnitte von Membranen (3, 4) getrennt sind und wobei wenigstens die Halterplatten (1, 2), und die Elektroden (7, 8) in ihren Randbereichen von einem Dichtrahmen (25) in einem fest gefügten Modul zusammengefasst sind, der Dichtrahmen Kanäle für die Zuführung und Abführung von Flüssigkeiten besitzt mit davon abgehenden Durchbrechungen zu ausgewählten Räumen und wobei in mindestens einer der Halterplatten Anschlusskanäle vorhanden sind, die mit den jeweiligen Kanälen in dem Dichtrahmen korrespondieren, **dadurch gekennzeichnet, dass** der Elektrodenraum (17) durch die Rahmendichtung (21) mit Elektrode (7) gebildet wird, dass die Eingangs- und Ausgangsräume (18, 19) alternierend angeordnet und parallel verschaltet sind und durch Abstandshalter (5, 6) gebildet werden, dass der Elektrodenraum (20) durch die Rahmendichtung (21) mit Elektrode (8) gebildet wird, wobei zusätzlich zu den Halterplatten (1, 2), und den Elektroden (7, 8) auch die Membranen in ihren Randbereichen von einem Dichtrahmen (25) in einem fest gefügten Modul zusammengefasst sind, wobei ferner die Membranen (3, 4) mit den Abstandshaltern (5, 6) und der Rahmendichtung (21) durch Verschweißen oder Verkleben fest verbunden sind.

2. Vorrichtung nach Anspruch 1, wobei der Dichtrahmen (25) gegenüber den flächigen Zuschnitten einen radialen und axialen Überstand an Kunststoff aufweist.

3. Vorrichtung nach Anspruch 2, wobei der axiale Überstand weniger als 100 µm beträgt und unter einem Anpressdruck eine Randdichtung bildet.

4. Vorrichtung nach einem der vorhergehenden Ansprüche, **dadurch gekennzeichnet, dass** poröse Membranen (3,4) mit Porengrößen von 1 bis 5000 nm eingesetzt werden.

5. Vorrichtung nach einem der vorhergehenden Ansprüche, **dadurch gekennzeichnet, dass** die porösen Membranen (3,4) auf einem der Werkstoffe basieren, der ausgewählt ist aus der Reihe: Celluloseester, Polyacrylnitril, Polyamid, Polycarbonat, Polyether, Polyethersulfon, Polyethylen, Polypropylen, Polysulfon, Polytetrafluoroethylen, Polyvinylalkohol, Polyvinylchlorid, Polyvinylidenfluorid, regenerierter Cellulose, oder Aluminiumoxid, Siliciumoxid, Titanoxid, Zirkonoxid sowie Mischkeramiken aus den oben genannten Oxiden.

6. Vorrichtung nach einem der obigen Ansprüche, **dadurch gekennzeichnet, dass** Anoden- und Kathodenraum (17,20) unabhängig voneinander zu Kreisläufen verschaltet sind.

7. Vorrichtung nach einem der obigen Ansprüche, **dadurch gekennzeichnet, dass** mehrere Module (23) über bidirektionale Halterplatten (24) verschaltet sind, wobei die bidirektionalen Halterplatten Kanäle zur Flüssigkeitsverteilung enthalten, die wenigstens mit den Eingangs- und Ausgangsräumen (18, 19) der Module (23) verschaltet sind.

8. Verfahren zur Elektrofiltration von gelösten oder dispergierten Substanzen unter Verwendung einer Vorrichtung nach einem der Ansprüche 1-7, wobei die Elektroden (7,8) kontinuierlich von Elektrodenspüllösung umspült werden und das Retentat kontinuierlich durch den Retentatraum (18) beziehungsweise das Permeat kontinuierlich durch den Permeatraum (19) geführt werden, **dadurch gekennzeichnet, dass** im Retentat gelöste und/oder dispergierte Substanzen mittels einer zwischen Retentatraum und Permeatraum angelegten Druckdifferenz sowie mittels eines zwischen Anode und Kathode (7,8) angelegten elektrischen Feldes separiert werden, wobei mindestens eine im Retentat gelöste oder dispergierte Substanz in einem Flüssigkeitsstrom aus dem Retentatraum (18) durch die Separationsmembran (4) in den den Konzentratraum (19) überführt wird, dergestalt, dass das Retentat mit einer Strömungsgeschwindigkeit von wenigstens 0,025 m/s, bevorzugt von 0,05 bis 0,5 m/s, an der Separationsmembran (4) vorbeiströmt.

9. Verfahren nach Anspruch 8, in dem Eingangsraum, Ausgangsraum und wahlweise auch die Elektrodenräume im Gleichstrom angeströmt werden.

## Claims

1. Device for membrane electrophoresis or electrofiltration, at least comprising a first retainer plate (1), a first electrode space (17) with electrode (7) consisting of a sheet-like blank of an electrode material, a plurality of entry and exit spaces (18, 19), a second electrode space (20) with electrode (8) consisting of a sheet-like blank of an electrode material and a second retainer plate (2), the spaces being separated from one another by sheet-like blanks of membranes (3, 4) and at least the retainer plates (1, 2) and the electrodes (7, 8) being combined in their edge regions by a sealing frame (25) in a tightly joined module, the sealing frame having channels for feeding and removing liquids, with passages leading therefrom to selected spaces, and connecting channels which correspond to the respective channels in the sealing frame being present in at least one of the retainer plates, **characterized in that** the electrode space (17) is formed by the frame seal (21) with electrode (7), **in that** the entry and exit spaces (18, 19) are arranged alternately and connected in parallel and formed by spacers (5, 6), **in that** the electrode space (20) is formed by the frame seal (21) with electrode (8), and, in addition to the retainer plates (1, 2) and the electrodes (7, 8), the membranes are also combined in their edge regions by a sealing frame (25) in a tightly joined module, and the membranes (3, 4) are also fixed to the spacers (5, 6) and the frame seal (21) by welding or adhesive bonding.

2. Device according to Claim 1, wherein the sealing frame (25) has a radial and axial projection of plastic relative to the sheet-like blanks.

3. Device according to Claim 2, wherein the axial projection is less than 100 µm and forms an edge seal under a contact pressure.

4. Device according to any of the preceding claims, **characterized in that** the porous membranes (3, 4) used have pore sizes of from 1 to 5000 nm.

5. Device according to any of the preceding claims, **characterized in that** the porous membranes (3, 4) are based on one of the materials which is selected from the series: cellulose ester, polyacrylonitrile, polyamide, polycarbonate, polyether, polyether sulfone, polyethylene, polypropylene, polysulfone, polytetrafluoroethylene, polyvinyl alcohol, polyvinyl chloride, polyvinylidene fluoride, regenerated cellulose, or alumina, silica, titanium oxide, zirconium oxide and mixed ceramics comprising the abovementioned oxides.

6. Device according to any of the above claims, **characterized in that** anode and cathode spaces (17, 20) are connected to circulations independently of one another.

7. Device according to any of the above claims, **characterized in that** a plurality of modules (23) are connected via bidirectional retainer plates (24), the bidirectional retainer plates containing channels for liquid distribution which are connected at least to the entry and exit spaces (18, 19) of the modules (23).

8. Method for electrofiltration of dissolved or dispersed substances using a device according to any of Claims 1-7, with continuous flow of electrode wash solution around the electrodes (7, 8) and passage of the retentate continuously through the retentate space (18) or of the permeate continuously through the permeate space (19), **characterized in that** substances dissolved and/or dispersed in the retentate are separated by means of a pressure difference applied between retentate space and permeate space and by means of an electric field applied between anode and cathode (7, 8), at least one substance dissolved or dispersed in the retentate being transferred in a liquid stream from the retentate space (18) through the separation membrane (4) into the concentrate space (19), so that the retentate flows past the separation membrane (4) at a flow velocity of at least 0.025 m/s, preferably from 0.05 to 0.5 m/s.

9. Method according to Claim 8, in which flow to the entry space, exit space and alternatively also the electrode spaces takes place cocurrently.

## Revendications

1. Dispositif d'électrophorèse à membrane ou d'électrofiltration, comportant
au moins une première plaque de support (1),
un premier espace d'électrode (17) doté d'une électrode (7) constituée d'un flan plat de matériau d'électrode,
plusieurs espaces d'entrée et de sortie (18, 19), un deuxième espace d'électrode (20) doté d'une électrode (8) constituée d'un flan plat de matériau d'électrode et
une deuxième plaque de support (2),
les espaces étant séparés les uns des autres par des flans plats de membranes (3, 4),
au moins les bordures des plaques de support (1, 2) et des électrodes (7, 8) étant réunies solidairement en un module par un cadre d'étanchéité (25),
le cadre d'étanchéité possédant des canaux permettant l'amenée et l'évacuation de liquides,
des perforations partant de ces canaux aboutissant à des espaces sélectionnés et
des canaux de raccordement étant prévus dans au moins l'une des plaques de support et correspondant aux canaux prévus dans le cadre d'étanchéité,
**caractérisé en ce que**
l'espace d'électrode (17) est formé par le joint d'étanchéité (21) du cadre avec une électrode (7),
**en ce que** les espaces d'entrée et de sortie (18, 19) sont disposés en alternance, raccordés en parallèle et formés par des écarteurs (5, 6),
**en ce que** l'espace d'électrode (20) est formé par le joint d'étanchéité (21) du cadre avec une électrode (8),
**en ce qu'**en plus des plaques de support (1, 2) et des électrodes (7, 8), les bordures des membranes sont également réunies solidairement en un module par un cadre d'étanchéité (25) et
**en ce que** les membranes (3, 4) sont reliées par soudage ou collage aux écarteurs (5, 6) et aux joints d'étanchéité (21) du cadre.

2. Dispositif selon la revendication 1, dans lequel le cadre d'étanchéité (25) présente par rapport aux flans plats un débord radial et un débord axial en matière synthétique.

3. Dispositif selon la revendication 2, dans lequel le débord axial vaut moins de 100 µm et forme sous pression un joint d'étanchéité de bord.

4. Dispositif selon l'une des revendications précédentes, **caractérisé en ce qu'**il utilise des membranes (3, 4) dont les pores ont une taille comprise entre 1 et 5 000 nm.

5. Dispositif selon l'une des revendications précédentes, **caractérisé en ce que** les membranes poreuses (3, 4) sont basées sur un matériau sélectionné dans l'ensemble : ester de cellulose, polyacrylonitrile, polyamide, polycarbonate, polyéther, polyéthersulfone, polyéthylène, polypropylène, polysulfone, polytétrafluoroéthylène, poly(alcool vinylique), poly(chlorure de vinyle), poly(fluorure de vinylidène), cellulose régénérée ou oxyde d'aluminium, oxyde de silicium, oxyde de titane, oxyde de zirconium ainsi que les céramiques mixtes constituées des oxydes ci-dessus.

6. Dispositif selon l'une des revendications précédentes, **caractérisé en ce que** l'espace d'anode et l'espace de cathode (17, 20) sont raccordés indépendamment l'un de l'autre à des circuits.

7. Dispositif selon l'une des revendications précédentes, **caractérisé en ce que** plusieurs modules (23) sont raccordés par des plaques de support (24) bidirectionnelles, les plaques de support bidirectionnelles contenant des canaux de répartition de liquide qui sont raccordés au moins aux espaces d'entrée et aux espaces de sortie (18, 19) des modules (23).

8. Procédé d'électrofiltration de substances dissoutes ou dispersées par recours à un dispositif selon l'une des revendications 1 à 7, les électrodes (7, 8) étant balayées en permanence par une solution de balayage d'électrodes, le rétentat étant amené en continu à travers l'espace (18) pour rétentat et le perméat étant amené en continu à travers l'espace (19) pour perméat,
**caractérisé en ce que**
les substances dissoutes et/ou dispersées présentes dans le rétentat sont séparées au moyen d'une différence de pression appliquée entre l'espace pour rétentat et l'espace pour perméat ainsi qu'au moyen d'un champ électrique appliqué entre l'anode et la cathode (7, 8),
**en ce qu'**au moins une substance dissoute ou dispersée dans le rétentat est transférée dans un écoulement de liquide partant de l'espace (18) pour rétentat, traversant la membrane de séparation (4) et aboutissant dans l'espace (19) pour concentrat, de telle sorte que le rétentat balaye la membrane de séparation (4) à une vitesse d'écoulement d'au moins 0,025 m/s et de préférence de 0,05 à 0,5 m/s.

9. Procédé selon la revendication 8 dans lequel l'espace d'entrée, l'espace de sortie et sélectivement aussi les espaces d'électrode sont traversés à co-courants.
